(19) Europäisches Patentamt
European Patent Office
Office européen des brevets

(11) **EP 2 208 984 A2**

(12) **EUROPÄISCHE PATENTANMELDUNG**

(43) Veröffentlichungstag:
**21.07.2010 Patentblatt 2010/29**

(51) Int Cl.:
***G01N 15/08*** *(2006.01)* *G01F 1/00* *(2006.01)*

(21) Anmeldenummer: **10150218.5**

(22) Anmeldetag: **07.01.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **14.01.2009 DE 102009005256**

(71) Anmelder: **Deutsches Zentrum für Luft- und Raumfahrt e.V.**
**51147 Köln (DE)**

(72) Erfinder:
• **Kuhn, Markus**
**70771, Leinfelden-Echterdingen (DE)**
• **Elsäßer, Henning**
**70565, Stuttgart (DE)**

(74) Vertreter: **Hoeger, Stellrecht & Partner**
**Patentanwälte**
**Uhlandstrasse 14c**
**70182 Stuttgart (DE)**

(54) **Haltevorrichtung für ein permeables Element und Messvorrichtung**

(57)     Haltevorrichtung für ein permeables Element, welches fluiddurchlässig ist, umfassend einen Fluid-Einkopplungsbereich, einen Fluid-Auskopplungsbereich, einen Halter, durch welchen das permeable Element zwischen dem Fluid-Einkopplungsbereich und dem Fluid-Auskopplungsbereich positioniert ist, eine Dichtungseinrichtung, welche das permeable Element umgibt, und einen Stempel, durch welchen eine Kraft in axialer Richtung auf die Dichtungseinrichtung ausübbar ist, wobei die Dichtungseinrichtung bei axialer Krafteinwirkung eine Kraft quer zur axialen Richtung auf das permeable Element ausübt.

**FIG.1**

EP 2 208 984 A2

**FIG.2**

**Beschreibung**

Die Erfindung betrifft eine Haltevorrichtung für ein permeables Element, welches fluiddurchlässig ist.

Die Erfindung umfasst ferner eine Messvorrichtung zur Bestimmung der Permeabilität für Fluid eines permeablen Elements.

Es ist wünschenswert, dass bei einer Haltevorrichtung und einer Messvorrichtung der eingangs genannten Art kein Fluidpfad an dem permeablen Element vorbei vorhanden ist, sondern Fluid nur das permeable Element durchströmen kann.

Aus der DE 32 19 101 C2 ist eine Dichtungseinrichtung für den zweiteilig dichtenden Abschluss einer Zigarette oder eines ähnlichen, zylindrischen Körpers in einer mit Luftdruckunterschieden arbeitenden Prüfeinrichtung bekannt, mit einem im Wesentlichen hohlzylindrischen, aus Gummi oder dergleichen bestehenden Dichtungskörper, der an seinem dichtenden Ende einen radial nach innen und außen vorspringenden Flansch aufweist, an dessen äußerem Rand ein im Wesentlichen hohlzylindrischer, zum Dichtungskörper koaxialer Halterungskörper angreift, welcher gegenüber einem Stützkörper für das vom Flansch abgekehrte Ende des Dichtungskörpers axial hin- und herbewegbar ist, wobei der innere Rand des Flansches die Dichtfläche bildet.

Aus der DE 34 03 145 A1 ist eine Vorrichtung zum Prüfen von in Aufnahmen eines Förderers liegenden stabförmigen Artikeln der tabakverarbeitenden Industrie durch Einleiten eines Luftstroms in die Stirnenden des Artikels bekannt, mit wenigstens einem dem Ende der Aufnahmen des Förderers zugekehrten, die Artikel während des Förderns abdichtenden, aus Gummi oder gummielastischen Stoffen bestehenden rotationssymmetrischen Dichtungskörper veränderbaren Innendurchmessers sowie mit Steuermitteln zum Ineinandergriffbringen des auf einem eine Relativbewegung zum Förderer ausführenden Träger angeordneten Dichtungskörpers mit den Artikeln, wobei der Dichtungskörper ein bei axialer Beaufschlagung durch einen die Aufnahmen begrenzenden stirnseitigen Randabschnitt des Förderers den Innenraum des Dichtungskörpers radial verengenden Bandringabschnitt aufweist.

Aus der DE 42 09 519 A1 ist ein Verfahren zum Testen der Unversehrtheit mindestens eines Filterelements in einer Filteranordnung bekannt.

Aus der DE 35 17 561 C1 ist eine Vorrichtung zum Prüfen einer Membran auf ihre Trenneigenschaften bekannt, wobei die Oberseite der Membran von Rohmedium überströmt ist, von der Unterseite der Membran das Permeat abgeführt wird. Die Prüfung erfolgt in einem aus einem oberen und unteren Deckelteil bestehenden, dicht verschließbaren Testbehälter, in dessen oberem Deckelteil ein Einsatz mittig angeordnet ist, der einen äußeren Ringkanal mit Ringspalt für die Zuführung des Rohmediums ausbildet und dessen zur Membran hin weisenden Oberfläche zum in der Mitte angebrachten Konzentratabzug hin konisch ausgebildet ist.

Der Erfindung liegt daher die Aufgabe zugrunde, eine Haltevorrichtung und eine Messvorrichtung der eingangs genannten Art bereitzustellen, bei welchen bei einfachem Aufbau eine zuverlässige Abdichtung um das permeable Element herum erreicht ist.

Diese Aufgabe wird bei der eingangs genannten Haltevorrichtung erfindungsgemäß dadurch gelöst, dass ein Fluid-Einkopplungsbereich vorgesehen ist, ein Fluid-Auskopplungsbereich vorgesehen ist, ein Halter vorgesehen ist, durch welchen das permeable Element zwischen dem Fluid-Einkopplungsbereich und dem Fluid-Auskopplungsbereich positioniert ist, eine Dichtungseinrichtung vorgesehen ist, welche das permeable Element umgibt, und ein Stempel vorgesehen ist, durch welchen eine Kraft in axialer Richtung auf die Dichtungseinrichtung ausübbar ist, wobei die Dichtungseinrichtung bei axialer Krafteinwirkung eine Kraft quer zur axialen Richtung auf das permeable Element ausübt.

Bei der erfindungsgemäßen Lösung ist es vorgesehen, dass die axiale und insbesondere rein axiale Presskraft die Dichtungseinrichtung an das permeable Element anpresst. Dadurch wird mit einfachen Mitteln eine hohe und zuverlässige Dichtwirkung erzielt.

Die erfindungsgemäße Haltevorrichtung lässt sich beispielsweise sowohl für Kryotemperaturanwendung als auch für Hochtemperaturanwendungen einsetzen.

Durch entsprechende Anpassung der Dichtungseinrichtung kann die gleiche Haltevorrichtung an unterschiedliche Höhen des permeablen Elements angepasst werden.

Beim Betrieb ist beispielsweise keine Pressluftbeaufschlagung oder dergleichen zur Erzielung einer hohen Dichtwirkung notwendig.

Insbesondere fällt eine Hauptströmungsrichtung für Fluid durch den Fluid-Einkopplungsbereich mit der axialen Richtung zusammen. Dadurch erhält man bei einfacher Ausbildung eine hohe Dichtwirkung.

Aus dem gleichen Grund ist es günstig, wenn die Dichtungseinrichtung eine Achse aufweist, welche mit der axialen Richtung zusammenfällt oder parallel zu dieser ist. Die Achse der Dichtungseinrichtung kann insbesondere eine Symmetrieachse sein.

Vorteilhaft ist es, wenn der Stempel eine Ausnehmung zur Fluidzuführung zu dem permeablen Element aufweist. Dadurch lässt sich durch den Stempel hindurch Fluid zur Durchströmung des permeablen Elements bereitstellen. Dadurch ergibt sich ein kompakter und einfacher Aufbau, wobei die Dichtungseinrichtung auf einfache Weise mit einer axialen Kraft beaufschlagbar ist.

Günstigerweise bildet dabei die Ausnehmung mindestens teilweise den Fluid-Einkopplungsbereich. Dadurch lässt sich die entsprechende Haltevorrichtung kompakt realisieren.

Ganz besonders vorteilhaft ist es, wenn der Stempel über eine Schraubeneinrichtung axial festlegbar beweglich ist. Dadurch ergibt sich ein einfacher Aufbau der Vorrichtung. Eine axiale Kraft lässt sich auf die Dichtungseinrichtung auf einfache Weise über die Schraubeneinrichtung ausüben.

Bei einem Ausführungsbeispiel ist ein erstes Gehäuseteil vorgesehen, welches eine Anlagefläche für die Dichtungseinrichtung aufweist. An dieser Anlagefläche lässt sich die Dichtungseinrichtung abstützen, wenn der Stempel axiale Kräfte ausübt.

Insbesondere weist das erste Gehäuseteil eine Ausnehmung auf, in welche ein Einwirkbereich des Stempels eingetaucht ist. Es lässt sich dadurch an einer Wand, welche die Ausnehmung begrenzt, der Stempel führen. Dadurch wird ein definierter Fluid-Einkopplungsbereich bereitgestellt.

Ferner günstig ist es, wenn eine Anlageseite der Dichtungseinrichtung, mit welcher diese an der Anlagefläche des ersten Gehäuseteils anliegt, einer Einwirkseite der Dichtungseinrichtung gegenüberliegt, auf welche der Stempel wirkt. Dadurch lässt sich auf einfache Weise eine Querkraft an der Dichtungseinrichtung erzeugen, mit welcher diese auf das permeable Element wirken kann, um eine Dichtwirkung zu erzielen.

Bei einer Ausführungsform ist ein zweites Gehäuseteil vorgesehen, welches an dem ersten Gehäuseteil über eine Schraubeneinrichtung gehalten ist, wobei das zweite Gehäuseteil mit dem Stempel verbunden ist oder auf den Stempel mit einer axialen Kraft einwirken kann. Beispielsweise ist das zweite Gehäuseteil über die Schraubeneinrichtung an einer Außenseite des ersten Gehäuseteils verschraubt. Es lässt sich dadurch auf einfache Weise eine ausreichend große axiale Presskraft erzeugen.

Günstig ist es, wenn mindestens im Bereich des permeablen Elements eine Wand, welche den Fluid-Einkopplungsbereich begrenzt, und eine Wand, welche den Fluid-Auskopplungsbereich begrenzt, fluchtend ausgerichtet sind. Dadurch wird verhindert, dass Wandteile in Strömungsbereiche ragen, wobei Turbulenzen erzeugt werden könnten. Dies ist insbesondere vorteilhaft, wenn beispielsweise die Permeabilität des permeablen Elements gemessen werden soll.

Aus dem gleichen Grund ist es günstig, wenn eine Innenseite der Dichtungseinrichtung, welche dem permeablen Element zugewandt ist, mindestens näherungsweise fluchtend mit der Wand des Fluid-Einkopplungsbereichs und/oder des Fluid-Auskopplungsbereichs ist.

Bei einer Ausführungsform umfasst die Dichtungseinrichtung mindestens einen Dichtungsring. Innerhalb des Dichtungsrings ist dann das permeable Element angeordnet. Vorzugsweise ist der Dichtungsring an die Abmessungen des permeablen Elements angepasst.

Es kann dabei vorgesehen sein, dass die Dichtungseinrichtung elastisch ausgebildet ist. Es lässt sich dadurch auf einfache Weise durch axiale Kraftausübung eine Querkraft erzeugen.

Es hat sich als vorteilhaft erwiesen, wenn die Querkontraktionszahl der Dichtungseinrichtung dann mindestens 0,4 ist und insbesondere im Bereich zwischen 0,45 und 0,5 liegt. Die Querkontraktionszahl wird auch als Poisson-Zahl bezeichnet.

Vorteilhafterweise ist dann die Dichtungseinrichtung aus einem elastomeren Material hergestellt.

Bei einer alternativen Ausführungsform umfasst die Dichtungseinrichtung ein erstes Dichtungselement mit einer ersten schiefen Seite, bezogen auf die axiale Richtung, und ein zweites Dichtungselement mit einer zweiten schiefen Seite, wobei die zweite schiefe Seite an die erste schiefe Seite angelegt ist und das zweite Dichtungselement an dem ersten Dichtungselement gleitend geführt ist. Über ihre jeweiligen schiefen Seiten stützen sich die Dichtungselemente aneinander ab. Bei Kraftausübung auf ein Dichtungselement kann dieses sich dann entsprechend gleitend bewegen und dabei eine Querkraft auf das permeable Element ausüben. Bei dieser Ausführungsform muss die Dichtungseinrichtung nicht elastisch ausgebildet werden. Insbesondere lassen sich Materialien mit einer Querkontraktionszahl sehr viel kleiner als 0,4 verwenden.

Es ist dann günstig, wenn der Stempel auf nur ein Dichtungselement und insbesondere auf das zweite Dichtungselement wirkt. Das zweite Dichtungselement kann dann an dem ersten Dichtungselement gleiten. Das erste Dichtungselement ist dann insbesondere unbeweglich gehalten.

Vorteilhafterweise umgibt dann das zweite Dichtungselement das permeable Element, d. h. das zweite Dichtungselement liegt an dem permeablen Element an.

Weiterhin liegt dann das erste Dichtungselement an einem ersten Gehäuseteil an und stützt sich an diesem ab. Dadurch kann sich indirekt das zweite Dichtungselement an dem ersten Gehäuseteil abstützen.

Weiterhin ist es günstig, wenn die erste schiefe Seite und die zweite schiefe Seite mindestens näherungsweise reziproke Neigungswinkel aufweisen, d. h. Neigungswinkel aufweisen, welche in der Summe 90° sind. Dadurch erhält man optimierte Führung und Abstützung der beiden Dichtungselemente aneinander.

Günstig ist es, wenn die Dichtungseinrichtung dem permeablen Element zugewandt mindestens eine Fase oder Ausnehmung aufweist. Durch die Ausübung einer axialen Kraft auf die Dichtungseinrichtung übt dieses eine Querkraft auf das permeable Element aus. Dies kann zu einer Bewegung der Dichtungseinrichtung führen, wobei dann Bereiche der Dichtungseinrichtung in einen Strömungsweg ragen können. Wenn beispielsweise die Dichtungseinrichtung elastisch ausgebildet ist, dann kann die axiale Presskraft zur "Einstülpung" von Dichtungseinrichtungsbereichen in den Strömungsweg führen. Bei einer Gleitverschieblichkeit eines zweiten Dichtungselements an dem ersten Dichtungselement kann eine Gleitverschiebung zu einem partiellen Einragen in den Strömungsweg führen. Durch das Vorsehen von Fasen oder Ausnehmungen an geeigneten Stellen kann dieses Hineinragen in den Strömungsweg verhindert werden.

Erfindungsgemäß wird ferner eine Messvorrichtung zur Bestimmung der Permeabilität für Fluid eines permeablen Elements bereitgestellt, welche eine erfindungsgemäße Haltevorrichtung aufweist.

Eine solche Messvorrichtung weist die bereits im Zusammenhang mit der erfindungsgemäßen Haltevorrichtung erläuterten Vorteile auf.

Insbesondere lassen sich Permeabilitätskoeffizienten mit hoher Genauigkeit und Zuverlässigkeit ermitteln.

Vorteilhaft ist es, wenn die Messvorrichtung eine Messeinrichtung umfasst, über welche in die Darcy-Gleichung oder Darcy-Forchheimer-Gleichung eingehende Messgrößen ermittelbar sind. Insbesondere kann über die Messeinrichtung der Druckabfall über der permeable Element ermittelt werden und es kann die Strömungsgeschwindigkeit ermittelt werden. In die Darcy-Gleichung geht ferner noch die dynamische Viskosität ein, die grundsätzlich temperaturabhängig und druckabhängig ist. In die Darcy-Forchheimer-Gleichung (manchmal auch als Forchheimer-Gleichung bezeichnet) geht zusätzlich noch die Dichte des Fluids ein. Auch diese ist grundsätzlich druck- und temperaturabhängig.

Insbesondere umfasst die Messeinrichtung dann eine Temperaturmesseinrichtung. Weiterhin umfasst die Messeinrichtung insbesondere eine Druckmesseinrichtung.

Es kann auch vorgesehen sein, dass die Messeinrichtung eine Durchflussmassenstrom-Übermittlungseinrichtung umfasst. Es lässt sich dann insbesondere die Strömungsgeschwindigkeit bei einer Permeabilitätsbestimmung nach der stationären Methode ermitteln.

Die nachfolgende Beschreibung bevorzugter Ausführungsformen dient im Zusammenhang mit den Zeichnungen der näheren Erläuterung der Erfindung.

Es zeigen:

Figur 1    eine Seitenansicht eines Ausführungsbeispiels einer erfindungsgemäßen Haltevorrichtung/Messvorrichtung;

Figur 2    eine Schnittansicht längs der Linie 2-2 gemäß Figur 1;

Figur 3    eine schematische vergrößerte Darstellung des Bereichs A gemäß Figur 2 in einem ersten Zustand ohne axiale Krafteinwirkung;

Figur 4    die gleiche Ansicht wie Figur 3 in einem zweiten Zustand bei axialer Krafteinwirkung; und

Figur 5    eine Teildarstellung eines zweiten Ausführungsbeispiels einer erfindungsgemäßen Haltevorrichtung/Messvorrichtung.

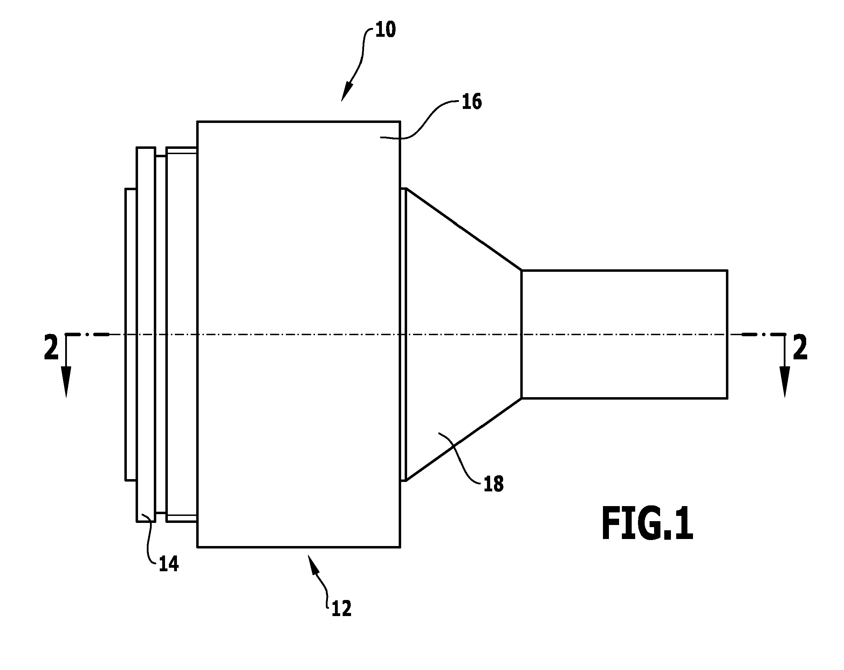

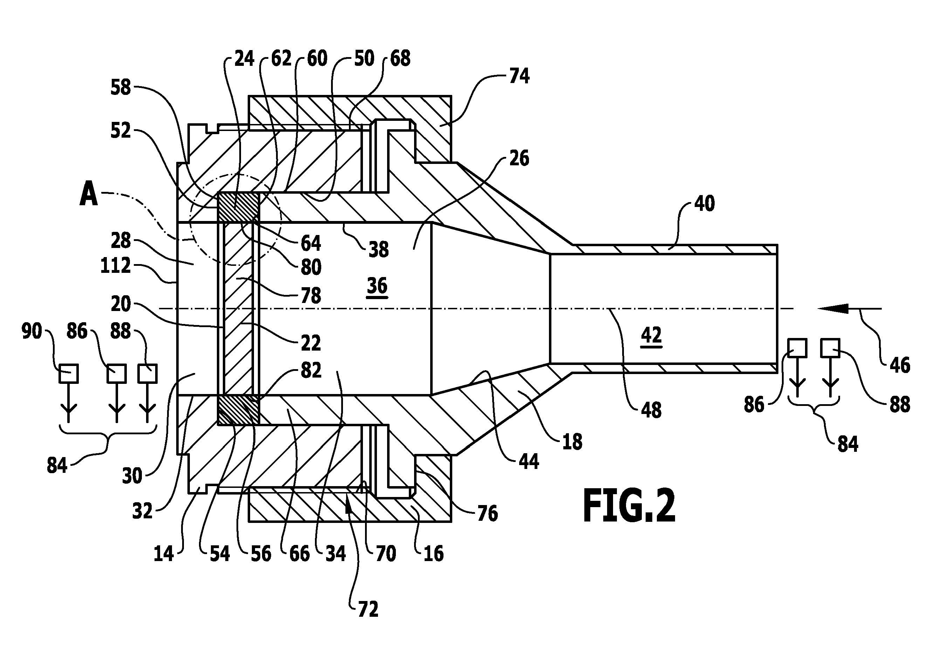

Ein erstes Ausführungsbeispiel einer erfindungsgemäßen Haltevorrichtung für ein permeables Element, welche in den Figuren 1 bis 4 schematisch gezeigt ist und mit 10 bezeichnet ist, ist als Messvorrichtung zur Bestimmung der Permeabilität des permeablen Elements für Fluide ausgebildet. Unter Fluiden werden in diesem Zusammenhang insbesondere Gase und Flüssigkeiten verstanden.

Die Haltevorrichtung/Messvorrichtung 10 umfasst ein Gehäuse 12 mit einem ersten Gehäuseteil 14, einem zweiten Gehäuseteil 16 und einem Stempel 18.

In dem ersten Gehäuseteil 14 ist ein Aufnahmeraum 20 für ein permeables Element 22 gebildet. Das permeable Element 22 kann dabei einstückig oder mehrteilig ausgebildet sein. Im letzteren Fall besteht das permeable Element 22 aus entsprechenden Unterelementen.

In dem Aufnahmeraum 20 ist das permeable Element 22 durch einen Halter 24 (Probenhalter) gehalten.

Die Haltevorrichtung 10 umfasst einen Fluid-Einkopplungsbereich 26 für Fluid und einen Fluid-Auskopplungsbereich 28 für Fluid mit entsprechenden Fluidräumen. Über den Fluid-Einkopplungsbereich 26 ist dem permeablen Element 22 Fluid zur Durchströmung des permeablen Elements 22 zuführbar und über den Fluid-Auskopplungsbereich 28 ist Fluid, welches das permeable Element 22 durchströmt hat, abführbar.

Der Fluid-Auskopplungsbereich 28 umfasst einen Fluidraum 30, welcher mindestens teilweise in dem ersten Gehäuseteil 14 gebildet ist und dabei durch eine Wand 32 des ersten Gehäuseteils 14 (seitlich) begrenzt ist.

Der Fluid-Einkopplungsbereich 26 umfasst einen Raum 34, welcher als Ausnehmung 36 mindestens teilweise in dem Stempel 18 gebildet ist. Der Raum 34 ist durch eine Wand 38 des Stempels 18 begrenzt.

In einer bevorzugten Ausführungswand sind die Wand 32 und die Wand 38 fluchtend zueinander. Eine Einhüllendenfläche der Wand 32 und der Wand 38 fällt zusammen.

Der Stempel 18 weist beispielsweise einen Stutzen 40 auf, welcher beispielsweise mit einem Anschluss versehen ist. Über den Stutzen 40 lässt sich Fluid in den Raum 34 einführen. Es kann dabei vorgesehen sein, dass ein Innenraum 42 im Stutzen 40 einen kleineren Querschnitt als der Raum 34, welcher dem permeablen Element 22 zugewandt ist, aufweist. In diesem Fall ist an dem Stempel 18 ein Zwischenbereich 44 gebildet, in welchem ein allmählicher Übergang im Querschnitt erfolgt.

Bei einem Ausführungsbeispiel sind die Räume 30 und 34 zylindrisch ausgebildet. Der Innenraum 42 im Stutzen 40 ist ebenfalls zylindrisch ausgebildet. Als Zwischenbereich 44 ist dann ein kegelstumpfförmiger Hohlraum zum Übergang zwischen dem Innenraum 42 und dem Raum 34 gebildet.

Fluid kann in einer Hauptströmungsrichtung 46 dem permeablen Element 22 zuströmen. Die Hauptströmungsrichtung 46 ist dabei parallel oder koaxial zu einer axialen Richtung 48. Die axiale Richtung 48 ist, wenn die Räume 30, 34 und 42 zylindrisch ausgebildet sind, koaxial zu einer entsprechenden Zylinderachse.

An dem ersten Gehäuseteil 14 ist auf den Fluidraum 30 folgend eine Ausnehmung 50 gebildet, welche einen größeren Querschnitt als der Fluidraum 30 aufweist. Die Ausnehmung 50 ist beispielsweise ebenfalls zylindrisch ausgebildet. Dadurch ist eine Schulter 52 mit einer beispielsweise ringförmigen Anlagefläche 54 bereitgestellt. Die Anlagefläche 54 ist dabei quer und vorzugsweise senkrecht zu der axialen Richtung 48 orientiert. An der Anlagefläche 54 ist eine Dichtungseinrichtung 56 mit einer Anlageseite 58 abgestützt. Die Anlageseite 58 der Dichtungseinrichtung 56 ist quer und insbesondere senkrecht zu der axialen Richtung 48.

Vorzugsweise sind die Anlagefläche 54 und die Anlageseite 58 ebene Flächen.

Bei einer günstigen Ausführungsform ist die Dichtungseinrichtung 56 so ausgebildet, dass sie auch eine Wand 60, welche die Ausnehmung 50 seitlich begrenzt, berührt und sich an dieser abstützen kann.

Die Dichtungseinrichtung 56 weist eine der Anlageseite 58 gegenüberliegende Einwirkseite 62 auf. Mit einer Stirnseite 64 kann der Stempel 18 auf die Einwirkseite 62 der Dichtungseinrichtung 56 mit einer axialen Kraft (Kraft in axialer Richtung 48) einwirken.

Der Stempel 18 weist dazu einen Einwirkbereich 66 auf, welcher in die Ausnehmung 50 eingetaucht ist und an welchem die Stirnseite 64 gebildet ist. Der Einwirkbereich 66 wiederum bildet die Wand 38 aus, welche den Raum 34 begrenzt.

Beispielsweise ist der Stempel 18 gleitend an der Wand 60 des ersten Gehäuseteils 14 in axialer Richtung 48 verschieblich geführt.

Insbesondere ist der Stempel 18 so ausgebildet und so geführt, dass er auf die Dichtungseinrichtung 56 eine rein axiale Kraft ausüben kann.

Der Einwirkbereich 66 des Stempels 18 ist insbesondere als Ringzylinder ausgebildet. Die Anlagefläche 54 ist dann insbesondere eine Ringfläche. Die Dichtungseinrichtung 56 ist in diesem Fall vorzugsweise als Dichtungsringeinrichtung ausgebildet.

An dem ersten Gehäuseteil 14 sitzt ein Außengewinde 68. Das zweite Gehäuseteil 16 weist ein Innengewinde 70 auf, welches in Eingriff mit dem Außengewinde 68 des ersten Gehäuseteils 14 steht. Der Stempel 18 ist beispielsweise fest mit dem zweiten Gehäuseteil 16 verbunden und dadurch mit dem ersten Gehäuseteil 14 über eine Schraubeneinrichtung 72 verbunden. Die Schraubeneinrichtung 72 ist durch das Außengewinde 68 und das Innengewinde 70 gebildet.

Es ist auch möglich, dass der Stempel 18 und das zweite Gehäuseteil 16 nicht fest miteinander verbunden sind. In diesem Ausführungsbeispiel weist das zweite Gehäuseteil 16 ein beispielsweise ringförmiges Anlageelement 74 auf, welches auf eine entsprechende Anlagefläche 76 des Stempels 18 einwirken kann.

Wenn der Stempel 18 und das zweite Gehäuseteil 16 nicht fest miteinander verbunden sind, lässt sich eine Torsion der Dichtungseinrichtung 56 vermeiden und es wird eine rein axiale Pressung erreicht.

Bei beiden Ausführungsformen lässt sich über die Schraubeneinrichtung 72 der Stempel 18 in Richtung der Anlagefläche 54 feststellbar bewegen; diese Bewegungsrichtung ist parallel zur Hauptströmungsrichtung 46. Dadurch lässt sich eine axiale Kraft (Kraft in axialer Richtung 48) auf die Dichtungseinrichtung 56 ausüben.

Die Dichtungseinrichtung 56 umgibt das permeable Element 22. Sie weist einen Innenraum 78 auf, in welchem das permeable Element 22 liegt. Beispielsweise, wenn die Dichtungseinrichtung 56 als Dichtungsringeinrichtung ausgebildet ist, ist dieser Innenraum 78 hohlzylindrisch. Das permeable Element 22 ist dann beispielsweise kreisscheibenförmig ausgebildet.

Bei dem Betrieb der Haltevorrichtung/Messvorrichtung 10 liegt eine Innenseite 80 der Dichtungseinrichtung 56, welche den Innenraum 78 begrenzt, an einer entsprechenden Seite 82 des permeablen Elements 22 an, und zwar derart, dass eine Abdichtung erreicht ist und Fluid nur durch das permeable Element 22 hindurch von dem Fluid-Einkopplungsbereich 26 in den Fluid-Auskopplungsbereich 28 gelangen kann.

Bei der Ausbildung als Messvorrichtung ist eine als Ganzes mit 84 bezeichnete Messeinrichtung vorgesehen. Die Messeinrichtung 84 umfasst insbesondere eine Temperaturmesseinrichtung 86 und eine Druckmesseinrichtung 88. Die Temperaturmesseinrichtung 86 umfasst dabei vorzugsweise mindestens einen Temperatursensor, welcher an dem Fluid-Einkopplungsbereich 26 angeordnet ist, und mindestens einen Temperatursensor, welcher an dem Fluid-Auskopplungsbereich 28 angeordnet ist. Dadurch lässt sich die Temperatur des Fluids vor und nach dem permeablen Element 22 bestimmen.

Grundsätzlich reicht es aus, wenn die Temperaturmesseinrichtung 86 nur einen Temperatursensor aufweist. Der Temperatursensor wird vor allem für die Bestimmung von Dichte und Viskosität des Fluids verwendet (siehe unten). Beispielsweise ist dann der entsprechende einzige Temperatursensor bezogen auf die Strömungsrichtung des Fluids vor dem permeablen Element 22 angeordnet, wenn dort auch die Massenströme (bei einem statischen Verfahren) gemessen und daraus die Strömungsgeschwindigkeiten ermittelt werden.

Die Druckmesseinrichtung 88 umfasst vorzugsweise mindestens einen Drucksensor, welcher an dem Fluid-Einkopplungsbereich 26 angeordnet ist, und mindestens einen Drucksensor, welcher an dem Fluid-Auskopplungsbereich 28 angeordnet ist. Dadurch lässt sich der Druck vor dem permeablen Element 22 und nach dem permeablen Element 22 bestimmen und insbesondere lässt sich die Druckdifferenz aufgrund Durchströmung des permeablen Elements 22 bestimmen, d. h. es lässt sich der Druckabfall bei der Fluiddurchströmung des permeablen Elements 22 bestimmen.

Weiterhin ist eine Durchflussmassenstrom-Ermittlungseinrichtung 90 vorgesehen. Bei bekanntem Durchflussmassenstrom lässt sich insbesondere die Geschwindigkeit des Fluids bei der Durchströmung ermitteln.

Grundsätzlich kann die Durchflussmassenstrom-Ermittlungseinrichtung 90 bezogen auf die Strömungsrichtung des Fluids sowohl vor als auch hinter dem permeablen Element 22 angeordnet sein. Wenn Druck und Temperatur hinter der Probe gemessen werden, dann erfolgt die Massenstrommessung ebenfalls hinter der Probe.

Bei der stationären Methode der Permeabilitätsbestimmung werden Durchflussmassenströme ermittelt. Bei dem dynamischen Bestimmungsverfahren genügt die Kenntnis des zeitlichen Druckverlaufs zur Permeabilitätsbestimmung.

Grundsätzlich ist es am günstigsten, wenn die entsprechenden Messungen durch die Messeinrichtung 84 direkt vor dem permeablen Element 22 als Probe durchgeführt werden. Eine solche Positionierung der Messeinrichtung 84 ist manchmal einbauraumbedingt nicht möglich. In diesem Fall erfolgt dann die Messung durch entsprechende Positionierung der Messeinrichtung 84 in einem größeren Abstand zu der Probe.

Die Dichtungseinrichtung 56 ist angepasst an die Breite der Anlagefläche 76 senkrecht zur axialen Richtung 48, und zwar derart, dass die Seite 82 der Dichtungseinrichtung 56 mindestens näherungsweise fluchtend zu den Wänden 38 und 32 ist, so dass die Dichtungseinrichtung 56 nicht oder höchstens minimal in den Strömungsweg für das Fluid hineinreicht.

Bei einem ersten Ausführungsbeispiel ist die Dichtungseinrichtung 56 aus einem elastischen Material und insbesondere einem Elastomer hergestellt. Insbesondere ist die Dichtungseinrichtung 56 als (vorzugsweise einstückiger) Dichtring 92 ausgebildet. Die Querkontraktionszahl der Dichtungseinrichtung 56 beträgt vorzugsweise mindestens 0,4. Bei einer vorteilhaften Ausführungsform liegt die Querkontraktionszahl im Bereich zwischen 0,45 und 0,50.

Wenn der Stempel 18 eine axiale Presskraft auf die Dichtungseinrichtung 56 ausübt, dann erfolgt aufgrund der Elastizität eine Querdehnung, durch welche die Innenseite 80 der Dichtungseinrichtung 56 an die Seite 82 des permeablen Elements 22 angedrückt wird und damit für eine Abdichtung gesorgt wird. Die Dichtungseinrichtung 56 übt eine Querkraft auf das permeable Element 22 aus.

Es kann dabei vorgesehen sein, dass die Dichtungseinrichtung 56 an der Innenseite 80 der Seite 82 des permeablen Elements 22 zugewandt Fasen 94a, 94b aufweist. Durch geeignete Ausbildung solcher Fasen 94a, 94b lässt sich, wie unten noch näher stehend erläutert, ein "Einstülpen" von Dichtungsmaterial in den Fluid-Auskopplungsbereich 28 und/oder den Fluid-Einkopplungsbereich 26 verhindern.

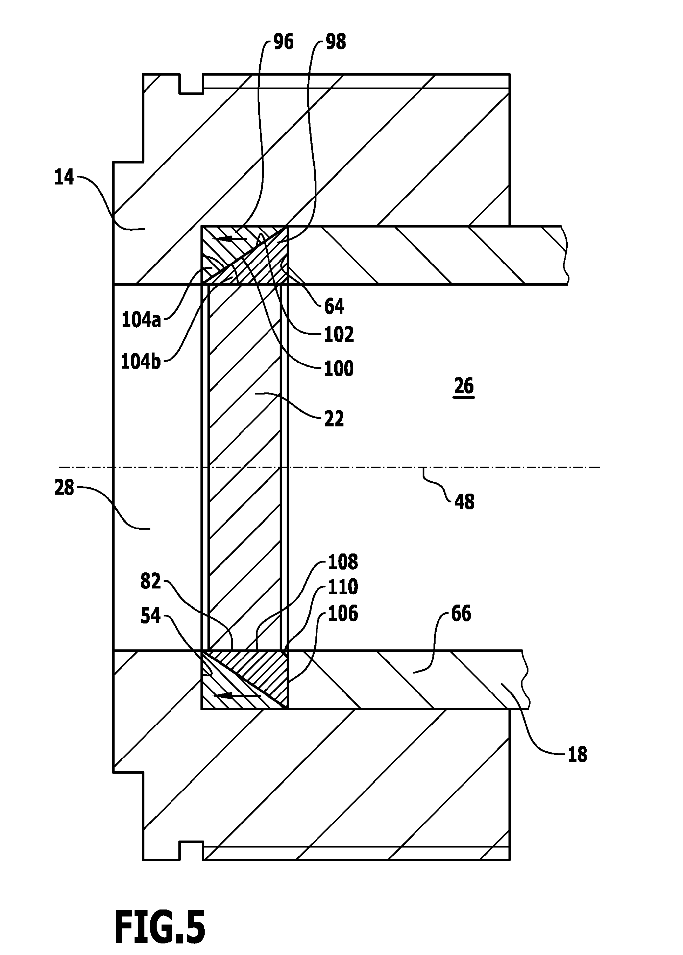

Bei einem zweiten Ausführungsbeispiel, welches in Figur 5 schematisch in einer Teildarstellung gezeigt ist, umfasst die Dichtungseinrichtung 56 ein erstes Dichtungselement 96 und ein zweites Dichtungselement 98. Das erste Dichtungselement 96 und das zweite Dichtungselement 98 sind beispielsweise jeweils einstückig ausgebildet, beispielsweise in Form jeweils eines Dichtungsrings.

Das erste Dichtungselement 96 weist dem zweiten Dichtungselement 98 zugewandt eine erste schiefe Seite 100 auf. Das zweite Dichtungselement 98 weist dem ersten Dichtungselement 96 zugewandt eine zweite schiefe Seite 102 auf. Über die schiefen Seiten 100 und 102 ist das zweite Dichtungselement 98 an dem ersten Dichtungselement 96 gleitend geführt.

Bei einer Ausbildung der Dichtungselemente 96 und 98 jeweils als Dichtungsringe mit einer Rotationssymmetrie zur axialen Richtung 48 sind die erste schiefe Seite 100 und die zweite schiefe Seite 102 jeweils konusförmig ausgestaltet. Die schiefen Seiten 100 und 102 sind dabei bezogen auf die axiale Richtung 48 schief, d. h. sie sind zur axialen Richtung 48 um einen (Neigungs-)Winkel geneigt. Der Winkel 104a, mit welchem die erste schiefe Seite 100 zu der axialen Richtung 48 geneigt ist, und der Winkel 104b, mit dem die zweite schiefe Seite 102 zur axialen Richtung 48 geneigt ist, sind dabei reziprok zueinander, d. h. sie ergeben in der Summe 90°.

Der kleinere Neigungswinkel liegt dabei typischerweise im Bereich zwischen 15° und 25° und vorzugsweise bei ca. 20°.

Das erste Dichtungselement 96 liegt an der Anlagefläche 54 und gegebenenfalls an der Wand 60 an. Das zweite Dichtungselement 98 liegt an dem ersten Dichtungselement 96 an. Über eine Einwirkungsseite 106 des zweiten Dichtungselements 98 wirkt der Stempel 18 mit seiner Stirnseite 64 auf diese Dichtungseinrichtung 56. Der Stempel 18 kann dabei bei Ausübung einer axialen Presskraft das zweite Dichtungselement 96 längs der ersten schiefen Seite 100 des ersten Dichtungselements 96 gleitend verschieben. Dadurch erfolgt an der Dichtungseinrichtung 56 durch das zweite Dichtungselement 98 eine Querbewegung senkrecht zur axialen Richtung 48, welche für eine Abdichtung sorgt. Eine entsprechende Innenseite 108 des zweiten Dichtungselements 98 wirkt dabei auf die Seite 82 des permeablen Elements 22.

Das erste Dichtungselement 96 und/oder das zweite Dichtungselement 98 können mit entsprechenden Ausnehmungen 110 versehen sein, welche die gleiche Wirkung wie die Fasen 94a, 94b aufweisen, um bei mit einer axialen Presskraft beaufschlagten Dichtungseinrichtung 56 das Hineinragen von Teilen der Dichtungseinrichtung 56 in den Fluid-Einkopplungsbereich 26 und den Fluid-Auskopplungsbereich 28 zu verhindern oder zumindest zu minimieren.

Die erfindungsgemäße Haltevorrichtung/Messvorrichtung 10 funktioniert wie folgt:

Bei geöffnetem ersten Gehäuseteil 14 und entferntem Stempel 18 wird das permeable Element 22 positioniert. Dazu wird die Dichtungseinrichtung 56 an die Anlagefläche 54 angelegt. Die Dichtungseinrichtung 56 ist dabei in ihrer Höhe parallel zur axialen Richtung 48 an die entsprechende Höhe des permeablen Elements 22 angepasst.

Das permeable Element 22 ist von der Dichtungseinrichtung 56 umgeben. Es wird dabei durch geeignete Positionierhilfsmittel in einem festen Abstand zu einem Ende 112 des ersten Gehäuseteils 14 gehalten. Diese Positionierhilfsmittel sind bei einem Betrieb der Haltevorrichtung/Messvorrichtung 10 entfernt.

Der Stempel 18 wird in die Ausnehmung 36 eingetaucht und über die Schraubeneinrichtung 72 an dem ersten Gehäuseteil 14 fixiert. Über die Schraubeneinrichtung 72 wird gesteuert eine axiale Presskraft auf die Dichtungseinrichtung 56 ausgeübt, was zu einer Querdehnung bzw. Querbewegung führt und die entsprechende Innenseite 80 bzw. 108 der Dichtungseinrichtung 56 an die Seite 82 des permeablen Elements 22 andrückt. Damit ist für eine zuverlässige Dichtwirkung gesorgt.

Der Stempel 18 übt auf die Dichtungseinrichtung 56 eine rein axiale Presskraft aus. An der Dichtungseinrichtung 56 wird dies teilweise umgesetzt in eine Querdehnung oder Querbewegung. Dazu ist die Dichtungseinrichtung 56 elastisch ausgebildet und/oder sie weist mindestens zwei zueinander bewegliche Dichtungselemente 96, 98 auf.

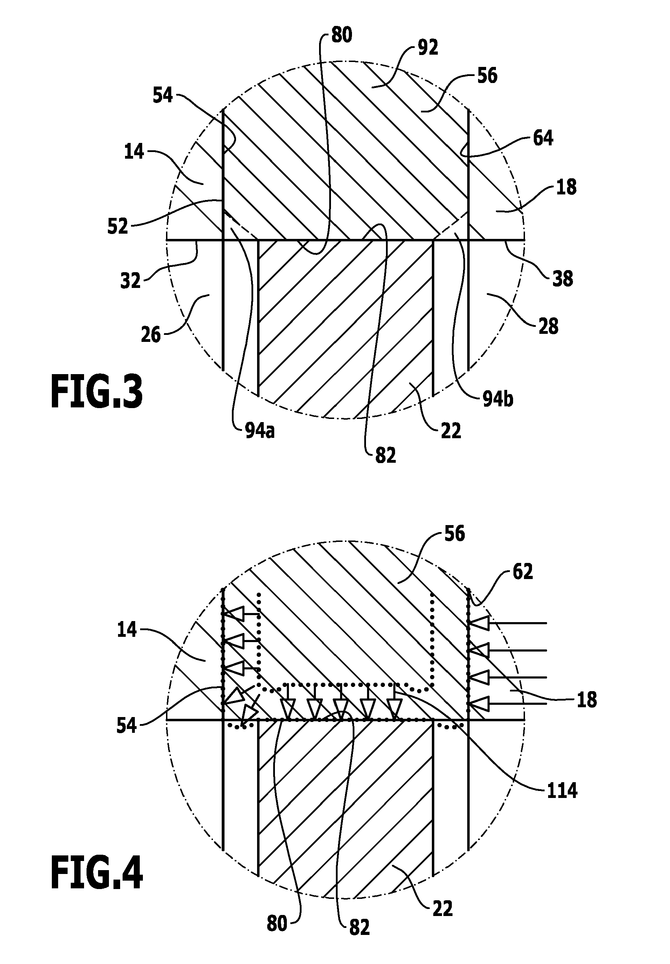

In Figur 4 ist schematisch der Effekt der axialen Krafteinwirkung über den Stempel 18 auf die Dichtungseinrichtung 56 gezeigt. Die Dichtungseinrichtung 56 stützt sich der Einwirkseite 62 gegenüberliegend an der Anlagefläche 54 ab. Sie wird zusammengepresst. Dabei entsteht eine Querkraft 114, mit welcher die Dichtungseinrichtung 56 über ihre Innenseite 80 auf die Seite 82 des permeablen Elements 22 wirkt.

Im Falle der Dichtungselemente 96 und 98 bewirkt die axiale Kraft eine Verschiebung des zweiten Dichtungselements 98, wodurch die Innenseite 108 an das permeable Element 22 angepresst wird.

Insbesondere bei radialsymmetrischer Ausbildung erfolgt durch die axiale Presskraft des Stempels 18 eine radiale Anpresskraft der Dichtungseinrichtung 56 an das permeable Element 22.

Wenn Fluid das permeable Element 22 durchströmt, dann ist dafür gesorgt, dass das gesamte Fluid, welches in den Fluid-Einkopplungsbereich 26 eingekoppelt wird, ausschließlich durch das permeable Element 22 hindurch in den Fluid-Auskopplungsbereich 28 gelangen kann.

Beispielsweise wird zur Bestimmung der Permeabilität (Permeabilitätskoeffizienten $k_1$ und $k_2$) des permeablen Elements 22 die Darcy-Forchheimer-Gleichung verwendet:

$$-\frac{\Delta p}{\Delta x} = \frac{\eta}{k_1}v + \frac{\rho}{k_2}v^2$$

$\Delta p$ ist dabei der Druckabfall über die Strecke $\Delta x$, $\eta$ ist die dynamische Viskosität, $\rho$ ist die Dichte des Fluids und $v$ ist die Strömungsgeschwindigkeit. (Die Darcy-Gleichung ist der Sonderfall, wenn $k_2$ gegen unendlich geht.)

Aus Druckmessungen lässt sich der Druckabfall über das permeable Element 22 (der Druckabfall zwischen dem Fluid-Auskopplungsbereich 28 und dem Fluid-Einkopplungsbereich 26) bestimmen. Die Wegstrecke $\Delta x$ ist dabei zumindest gemittelt die Höhe des permeablen Elements 22 in der axialen Richtung 48.

Bei bekanntem Druck und bekannter Temperatur des Fluids lassen sich Dichte und dynamische Viskosität ermitteln. Die Geschwindigkeit der Strömung lässt sich aus der Massenstrombestimmung ermitteln.

Bei der Permeabilitätsbestimmung nach dem stationären Verfahren werden unterschiedliche Massenströme stationär durch das permeable Element 22 gesandt. Die Geschwindigkeit wird dann aus dem gemessenen Durchflussmassenstrom ermittelt.

Bei der Permeabilitätsbestimmung nach dem dynamischen Verfahren wird an das permeable Element 22 ein Druck angelegt. Dieser Druck lässt schlagartig nach und das permeable Element 22 wird durchströmt. Aus dem abklingenden Druckgradienten kann man die Strömungsgeschwindigkeiten bestimmen.

Erfindungsgemäß wird eine Haltevorrichtung/Messvorrichtung 10 bereitgestellt, welche sich für Permeabilitätsmessungen bzw. Durchflussmessungen einsetzen lässt. Beispielsweise lassen sich dadurch permeable Keramikelemente für Effusionskühlungsanwendungen bzw. Transpirationskühlungsanwendungen untersuchen. Es lassen sich Filter und Keramiken prüfen. Weitere Anwendungsbeispiele sind die Prüfung von Katalysatoren, Solar-Receivern, Brennstoffzellen, Permeaten für die Chemie-, Petro- und Verfahrenstechnik-Industrie. Beispielsweise lassen sich auch Permeaten in der Medizintechnik prüfen oder Porenbrenner.

Über die Haltevorrichtung 10 lassen sich beispielsweise auch Filter oder dergleichen halten.

Durch die erfindungsgemäße Lösung erhält man eine zuverlässige Abdichtung an dem permeablen Element 22. Eine Anpassung an unterschiedliche Probenhöhen lässt sich auf einfache Weise über entsprechende Anpassung der Höhe der Dichtungseinrichtung 56 erreichen. Dadurch kann die Haltevorrichtung/Messvorrichtung 10 mit unterschiedlichen permeablen Elementen 22 verwendet werden.

Zur Erzielung der zuverlässigen Dichtwirkung ist beispielsweise keine Pressluftversorgung der Dichtungseinrichtung 56 notwendig.

Durch die erfindungsgemäße Lösung ist es sowohl möglich, permeable Elemente 22 bei kryogenen Temperaturen als auch Hochtemperaturen mit hoher Dichtwirkung zu halten.

Grundsätzlich ist es möglich, bei der Fertigung der Haltevorrichtung/Messvorrichtung 10 mit groben Toleranzen zu arbeiten. Dadurch erhält man eine kostengünstige Fertigung. Auch der Einsatz der Haltevorrichtung/Messvorrichtung 10 ist vereinfacht, da insbesondere der Einbau des permeablen Elements 22 vereinfacht ist.

Da beispielsweise keine Pressluftbeaufschlagung der Dichtungseinrichtung 56 notwendig ist, lassen sich auch die Betriebskosten gering halten.

Durch die Schraubeneinrichtung 72 lässt sich die axiale Presskraft auf die Dichtungseinrichtung 56 auf einfache Weise steuern.

## Patentansprüche

1. Haltevorrichtung für ein permeables Element (22), welches fluiddurchlässig ist, umfassend einen Fluid-Einkopplungsbereich (26), einen Fluid-Auskopplungsbereich (28), einen Halter (24), durch welchen das permeable Element (22) zwischen dem Fluid-Einkopplungsbereich (26) und dem Fluid-Auskopplungsbereich (28) positioniert ist, eine Dichtungseinrichtung (56), welche das permeable Element (22) umgibt, und einen Stempel (18), durch welchen eine Kraft in axialer Richtung (48) auf die Dichtungseinrichtung (56) ausübbar ist, wobei die Dichtungseinrichtung (56) bei axialer Krafteinwirkung eine Kraft quer zur axialen Richtung (48) auf das permeable Element (22) ausübt.

2. Haltevorrichtung nach Anspruch 1, **dadurch gekennzeichnet, dass** eine Hauptströmungsrichtung (46) für Fluid durch den Fluid-Einkopplungsbereich (26) mit der axialen Richtung (48) zusammenfällt.

3. Haltevorrichtung nach Anspruch 1 oder 2, **dadurch gekennzeichnet, dass** die Dichtungseinrichtung (56) eine Achse aufweist, welche mit der axialen Richtung (48) zusammenfällt oder parallel zu dieser ist.

4. Haltevorrichtung nach einem der vorangehenden Ansprüche, **dadurch gekennzeichnet, dass** der Stempel (18) eine Ausnehmung (36) zur Fluidzuführung zu dem permeablen Element (22) aufweist, und insbesondere, dass die Ausnehmung (36) mindestens teilweise den Fluid-Einkopplungsbereich (26) bildet.

5. Haltevorrichtung nach einem der vorangehenden Ansprüche, **dadurch gekennzeichnet, dass** der Stempel (18) über eine Schraubeneinrichtung (72) axial feststellbar beweglich ist.

6. Haltevorrichtung nach einem der vorangehenden Ansprüche, **gekennzeichnet durch** ein erstes Gehäuseteil (14), welches eine Anlagefläche (54) für die Dichtungseinrichtung (56) aufweist, und insbesondere, dass das erste Gehäuseteil (14) eine Ausnehmung (50) aufweist, in welche ein Einwirkbereich (66) des Stempels (18) eingetaucht ist, und insbesondere, dass eine Anlageseite (58) der Dichtungseinrichtung (56), mit welcher diese an der Anlagefläche (54) des ersten Gehäuseteils (14) angelegt ist, einer Einwirkseite (62) der Dichtungseinrichtung (56) gegenüberliegt, auf welche der Stempel (18) wirkt, und insbesondere **gekennzeichnet durch** ein zweites Gehäuseteil (16), welches an dem ersten Gehäuseteil (14) über eine Schraubeneinrichtung (72) gehalten ist, wobei das zweite Gehäuseteil (16) mit dem Stempel (18) verbunden ist oder auf den Stempel (18) mit einer axialen Kraft einwirken kann.

7. Haltevorrichtung nach einem der vorangehenden Ansprüche, **dadurch gekennzeichnet, dass** mindestens im Bereich des permeablen Elements (22) eine Wand (38), welche den Fluid-Einkopplungsbereich (26) begrenzt, und eine Wand (32), welche den Fluid-Auskopplungsbereich (28) begrenzt, fluchtend ausgerichtet sind, und insbesondere, dass eine Innenseite (80) der Dichtungseinrichtung (56), welche dem permeablen Element (22) zugewandt ist, mindestens näherungsweise fluchtend mit der Wand (38) des Fluid-Einkopplungsbereichs (26) und/oder der Wand (32) des Fluid-Auskopplungsbereichs (28) ist.

8. Haltevorrichtung nach einem der vorangehenden Ansprüche, **dadurch gekennzeichnet, dass** die Dichtungseinrichtung (56) mindestens einen Dichtungsring (92; 96, 98) umfasst.

9. Haltevorrichtung nach einem der vorangehenden Ansprüche, **dadurch gekennzeichnet, dass** die Dichtungseinrichtung (56) elastisch ausgebildet ist, und insbesondere, dass die Querkontraktionszahl der Dichtungseinrichtung (56) mindestens 0,4 ist und insbesondere im Bereich zwischen 0,45 und 0,5 liegt, und insbesondere, dass die Dichtungseinrichtung (56) aus einem elastomeren Material ist.

10. Haltevorrichtung nach einem der vorangehenden Ansprüche, **dadurch gekennzeichnet, dass** die Dichtungseinrichtung (56) ein erstes Dichtungselement (96) mit einer bezogen auf die axiale Richtung (48) ersten schiefen Seite (100) und ein zweites Dichtungselement (98) mit einer bezogen auf die axiale Richtung (48) zweiten schiefen Seite (102) umfasst, wobei die zweite schiefe Seite (102) an die erste schiefe Seite (100) angelegt ist und das zweite Dichtungselement (98) an dem ersten Dichtungselement (96) gleitend geführt ist, und insbesondere, dass der Stempel (18) auf das zweite Dichtungselement (98) wirkt, und insbesondere, dass das zweite Dichtungselement (98) an dem permeablen Element (22) anliegt, und insbesondere, dass das erste Dichtungselement (96) an einem ersten Gehäuseteil (14) anliegt, und insbesondere, dass die erste schiefe Seite (100) und die zweite schiefe Seite (102) mindestens näherungsweise reziproke Neigungswinkel (104a, 104b) aufweisen.

11. Haltevorrichtung nach einem der vorangehenden Ansprüche, **dadurch gekennzeichnet, dass** die Dichtungseinrichtung (56) dem permeablen Element (22) zugewandt mindestens eine Fase (94a, 94b) oder Ausnehmung aufweist.

12. Messvorrichtung zur Bestimmung der Permeabilität für Fluid eines permeablen Elements (22), umfassend eine Haltevorrichtung gemäß einem der vorangehenden Ansprüche.

13. Messvorrichtung nach Anspruch 12, **gekennzeichnet durch** eine Messeinrichtung (84), über welche in die Darcy-Gleichung oder Darcy-Forchheimer-Gleichung eingehende Messgrößen ermittelbar sind.

14. Messvorrichtung nach Anspruch 13, **dadurch gekennzeichnet, dass** die Messeinrichtung (84) eine Temperaturmesseinrichtung (86) umfasst und/oder die Messeinrichtung (84) eine Druckmesseinrichtung (88) umfasst.

15. Messvorrichtung nach Anspruch 13 oder 14, **dadurch gekennzeichnet, dass** die Messeinrichtung (84) eine Durch-flussmassenstrom-Ermittlungseinrichtung (90) umfasst.

FIG.1

FIG.2

EP 2 208 984 A2

FIG.3

FIG.4

**FIG.5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3219101 C2
- DE 3403145 A1
- DE 4209519 A1
- DE 3517561 C1